# EUROPEAN PATENT APPLICATION

(11) **EP 4 692 003 A1**
(43) Date of publication of application: **11.02.2026**
(21) Application number: 24778346.7
(22) Date of filing: 22.03.2024
(51) Int. Cl.: C02F 1/66

(54) **SYSTEM FOR MONITORING, TREATMENT AND SYNCHRONISED TRANSFER OF LIQUID WASTE TO TREATMENT POINTS AND METHOD FOR USING SAME**

(30) Priority: 24.03.2023 ES 202330251
(71) Applicant: Agrolinera Astur, S.L., 33860 Salas (Asturias) (ES)
(72) Inventor: GUTIÉRREZ CANSECO, Juan, 33005 ASTURIAS (ES)
(74) Representative: Lehmann Novo, Maria Isabel
(86) International application number: PCT/ES2024/070186
(87) International publication number: WO 2024/200894

(57) **Abstract**

System for the monitoring, treatment, and synchronized transfer of liquid waste to other treatment points (13), comprising a storage point (3) for slurry (1) and/or whey (19) at each production site (2); transfer means up to a collection point; a monitoring device (5) at each production site (2); and remote control means (12) comprising a server (22) and wireless communication means (15) with a process control module (8) of each monitoring device (5).

Process for monitoring by means of this system, comprising an automatic monitoring (36) for sampling of at least the slurry and/or whey from each storage point (3), activated by remote control; a remote activation (37) of the monitoring device (5) by the control means (12), for sending the waste to the collection point; and a reception (38) at the collection point of the waste sent from at least one production site (2).

## Description

### Technical Field of the Invention

The present invention pertains to the technical field of anaerobic treatment processes for liquid and semiliquid wastes, particularly those generated in farms and livestock operations.

### Background of the Invention

Currently, the large volume of waste generated on farms, and particularly in livestock operations, as well as its management, presents a series of problems that render it neither economical nor sustainable. This waste consists mainly of slurry, composed of animal excrement mixed with urine, water, and other materials (such as straw, etc.).

One solution previously used for reducing this slurry was its application as fertilizer for agricultural land. However, this use as fertilizer presents serious environmental and economic issues. When applied to soil in excessive amounts, runoff can carry the waste into streams, rivers, and lakes. Sometimes, rainfall or irrigation water can cause it to seep through the subsoil and contaminate aquifers. For this reason, the direct use of slurry as fertilizer is now generally prohibited, with some exceptions.

In the search for solutions to this problem, the processing of slurry in biogas plants was identified as a viable option. In such facilities, slurry is transformed into biogas and digestate, which are subsequently used for energy generation and as fertilizer, respectively.

However, in practice, this process is only economically viable for large-scale livestock operations, where the cost of logistics per ton is very low and reasonable collection fees can be charged. In contrast, in rural areas where intensive and small-scale farming predominates-despite being more environmentally friendly and producing higher-quality products-slurry degrades in pits and loses value for biogas plants, which are then forced to impose high collection fees on farmers.

This occurs because the volumes produced by these small livestock farms are smaller. As a result, they are forced to store the slurry in pits and tanks until a sufficient quantity is accumulated to make removal costs feasible. During this time, the slurry is deposited in pits or lagoons where uncontrolled anerobic fermentation process begins spontaneously, generating odors, emissions and degrading the quality of the waste for gasification.

Subsequently, this waste is removed from the pit or tank by pumping into a tanker, which either directly or via transfer to an intermediate storage tank, transports it to a biogas plant for treatment. This process is inefficient, as it is time- and energy-intensive, unstable due to its dependence on the availability of both the farmer and the waste handler, and lacks transparency, as the condition of the slurry extracted from the pit is not monitored.

Due to the absence of control at the origin and the fact that each livestock facility has different storage durations, the biogas plant ultimately receives a heterogeneous mixture of materials with varying levels of aerobic fermentation. This complicates the processing at the plant and hinders the implementation of corrective measures at the source livestock facility.

All of this results in a loss of value of the slurry as an input for biogas plants, and the digestate produced becomes inconsistent in quality, thereby decreasing its value as well. Consequently, the cost of collecting slurry becomes unjustifiable, and biogas plants are forced to charge high collection fees, with small-scale farmers being the most affected.

In addition, small-scale artisanal cheese-making operations face a similar challenge in managing the whey generated during cheese production. This byproduct is highly polluting and difficult to store and handle, even in small quantities, as it emits odors and quickly acidifies upon exposure to air.

Since many livestock farms also produce artisanal cheese using part of their milk, and the invention is applicable both to livestock farms and to artisanal cheese dairies, throughout this specification we will refer indistinctly to cheesemakers and livestock farmers as producers, to dairies and livestock farms as facilities, to slurry or whey as waste, to slurry pits or whey tanks as storage points, and to biogas plants or whey processing plants as treatment points.

To address this issue, the applicant of the present invention previously developed an improved anaerobic treatment process for slurry, aimed at ensuring proper management of this waste during its conversion into biogas and digestate. This process reduces the time and occurrence of undesired aerobic fermentation by enabling efficient and controlled collection of slurry in an anaerobic environment, thereby preserving its gasification potential. However, it still requires farmers themselves to transport the slurry to designated storage tanks.

In practice, it has been observed that this method continues to present challenges due to the need for farmers to be actively involved in the delivery of the waste, which imposes both time and cost burdens. This often results in delayed action or, in many cases, complete inaction by the farmers.

Furthermore, with this system, the arrival of the slurry at the plant does not align with the plant's demand for waste input, nor does it arrive under optimal conditions, as no monitoring is performed until the slurry is delivered. In fact, this post-delivery monitoring often results in the waste being rejected.

In view of all these practical issues, it becomes evident that a treatment and monitoring system-and an associated process-is needed, one that addresses these problems by enabling a method of operation with reduced costs and time investment for farmers, while also ensuring more effective slurry delivery to the biogas plant. Such a system must provide certainty that the anaerobic conditions of the waste are adequate at the time of delivery.

Moreover, this must be achieved through a system designed so that usage costs are affordable for small-scale livestock farmers.

### Description of the invention

The system for monitoring, treatment, and synchronized transfer of liquid waste to anaerobic digestion plants, as disclosed herein, wherein said waste comprises slurry originating from one or more livestock farms, comprises a slurry storage pit for each livestock farm.

The system further comprises transfer means for conveying the waste to a collection point.

It also comprises an electromechanical monitoring device for each farm, and each of said devices comprises an internal unit positioned in a submerged manner within the pit of the farm, for recording and controlling the parameters of the stored slurry, and an external unit located outside said pit, for managing the monitoring processes.

The external unit comprises a flow control module configured to activate the circulation of waste from the pit to said external unit through the internal unit for sampling purposes, and also to activate the circulation of waste towards the transfer means. It further comprises a sampling module equipped with measurement sensors and a process control module that governs the internal unit and the other modules of the external unit.

Said external unit is connected to the internal unit via power supply cables, data transfer cables, a first conduit for extracting homogenized slurry samples, and a first return conduit for said samples.

The system additionally comprises remote control means operable by an operator, said means including a server and wireless communication means with the process control module of the external unit of each of the system's monitoring devices, and with at least one electronic device comprising integrated software.

Also disclosed herein is a process for monitoring, treatment, and synchronized transfer of liquid waste to anaerobic digestion plants using a system as previously defined.

Said process comprises a first automatic monitoring phase for sampling, at regular time intervals, of at least the slurry stored in a pit of one or more livestock farms, via the external unit of the monitoring device corresponding to each farm. Said monitoring is activated by remote control through the system's control means.

Next, a second phase is carried out, consisting of the remote activation of the monitoring device by the control means, for transferring the stored waste to the collection point by means of the transfer means, after analysis of the waste to be transferred and in the event that the obtained values are deemed suitable.

A third phase is further included, comprising the reception at the collection point of the waste transferred from at least one livestock farm.

By means of the system for monitoring, treatment, and synchronized transfer of liquid waste to anaerobic digestion plants, and the monitoring process carried out using said system, as disclosed herein, a significant improvement over the prior art is achieved.

Said improvement lies in enabling a process that allows for the transfer of homogeneous and fresh slurry, given that it may be conveyed to the collection point at a significantly higher frequency, thereby reducing oxidation levels and the emission of odors in the surrounding environment. This more homogeneous slurry exhibits a higher gasification potential and is optimal for such gasification processes, without requiring intervention by the livestock operator.

The system operator - typically the biogas plant itself - can, through the monitoring device, remotely monitor the level and maturation state of the slurry stored in the pit, and, based on the location and availability of its fleet, determine when and how much volume is to be transferred from the pit and received at the collection point.

As this process does not require intervention by the livestock operator and the transactions are registered automatically without operator input, a direct traceability link can be established between the discharge operation and the records of such operations stored in an auditable database. This enables the livestock operator to provide certified and transparent evidence of proper waste management to third parties, which constitutes a significant added value in view of increasing regulatory, corporate, and societal demands.

Moreover, since the waste is pre-treated within the pit itself, the transport of heterogeneous volumes of slurry - which may cause blockages - is avoided, and the joint gasification potential of straw and slurry is more effectively utilized by facilitating mixing with reduced granularity.

Furthermore, by eliminating the need for transporting slurry and whey in tankers from livestock farms and dairies to the reception point, a more energy- and time-efficient, predictable, and cost-effective collection process is achieved. This system is also more convenient for the livestock operator and entails a lower environmental footprint, as the use of tankers by the operator is no longer required.

In specific cases where the intervention of the livestock operator is required for the transport of waste, such intervention is fully controlled and synchronized to ensure it is carried out at the appropriate stage of the waste's condition and when the remaining components of the process are prepared, thereby preventing delays or time extensions in any of the phases and ensuring that the characteristics of the waste are not adversely affected.

From the perspective of the collection system operator, the process is also more efficient. By having real-time, simultaneous visibility of both the quantity and quality of waste within their operating area, as well as the status and geolocation of collection resources, the operator can plan and retrieve waste "on demand" according to the requirements of the serviced plant and can achieve optimal utilization of available collection capacity.

The operator may also utilize the storage capacity of the pits at the livestock facilities to manage incidents and optimize collection routes. Furthermore, the possibility of loading the waste at the centralized collection point, rather than at the originating farms, significantly reduces operational time, as large volumes can be transferred rapidly at a location equipped with a standardized and optimized connection suitable for the collection medium.

Accordingly, the process is highly effective and efficient, resulting in increased biogas plant performance, improved control, and reduced collection times for the operator, decreased inconvenience and improved traceability of waste management for the livestock operator, and simultaneously lower collection costs, as pumping through PVC pipelines is significantly more cost-effective than loading and transporting via tankers.

### Brief description of the figures

To facilitate a clearer understanding of the characteristics of the invention, and in accordance with a preferred embodiment thereof, a series of drawings are provided as an integral part of the present description. These drawings are illustrative and non-limiting in nature and depict the following:
Figure 1 illustrates a conceptual diagram, applied to an operational area, of the system and process for the monitoring, treatment, and synchronized transfer of liquid waste to anaerobic digestion plants, according to a first preferred embodiment of the invention.
Figure 2 illustrates a conceptual diagram, applied to a single livestock facility, of the system and process for the monitoring, treatment, and synchronized transfer of liquid waste to anaerobic digestion plants, according to a first preferred embodiment of the invention.
Figure 3 illustrates a logic-functional diagram of the monitoring device used in the system for the monitoring, treatment, and synchronized transfer of liquid waste to anaerobic digestion plants, according to a first preferred embodiment of the invention.
Figure 4 illustrates a structural and functional diagram of the internal unit of the monitoring device used in the system for the monitoring, treatment, and synchronized transfer of liquid waste to anaerobic digestion plants, according to a first preferred embodiment of the invention.
Figure 5 illustrates a structural and functional diagram of the external unit of the monitoring device used in the system for the monitoring, treatment, and synchronized transfer of liquid waste to anaerobic digestion plants, according to a first preferred embodiment of the invention.
Figure 6 illustrates a logic diagram of the connections between elements of the monitoring device and the relevant equipment and infrastructure of a livestock facility, for the system for the monitoring, treatment, and synchronized transfer of liquid waste to anaerobic digestion plants, according to a first preferred embodiment of the invention.
Figure 7 illustrates a logic-functional diagram of the data communications between the monitoring device, the control means, and the cloud database, depending on whether such communications are carried out via 3G/4G internet or via UHF radio, for the system for the monitoring, treatment, and synchronized transfer of liquid waste to anaerobic digestion plants, according to a first preferred embodiment of the invention.
Figure 8 illustrates a block diagram of the process for on-demand monitoring, treatment, and synchronized transfer of liquid waste in livestock operations, according to a first preferred embodiment of the invention.
Figure 9 illustrates a conceptual diagram, applied to an operational area, of the process for on-demand monitoring, treatment, and synchronized transfer of liquid waste in livestock operations, according to a second preferred embodiment of the invention.
Figure 10 illustrates a block diagram of the process for on-demand monitoring, treatment, and synchronized transfer of liquid waste in livestock operations, according to a second preferred embodiment of the invention.
Figure 11 illustrates a conceptual diagram, applied to an operational area, of the process for on-demand monitoring, treatment, and synchronized transfer of liquid waste in livestock operations, according to a third preferred embodiment of the invention.
Figure 12 illustrates a block diagram of the process for on-demand monitoring, treatment, and synchronized transfer of liquid waste in livestock operations, according to a third preferred embodiment of the invention.
Figure 13 illustrates a conceptual diagram, applied to an operational area, of the process for on-demand monitoring, treatment, and synchronized transfer of liquid waste in livestock operations, according to a fourth preferred embodiment of the invention.
Figure 14 illustrates a block diagram of the process for on-demand monitoring, treatment, and synchronized transfer of liquid waste in livestock operations, according to a fourth preferred embodiment of the invention.

### Detailed description of a preferred realization mode of the invention

In reference to the accompanying figures, it may be observed that, in a first preferred embodiment of the invention, the system for the monitoring, treatment, and synchronized transfer of liquid waste to anaerobic digestion plants - wherein said waste comprises slurry (1) or whey (19) originating from one or more livestock operations (2) - comprises a slurry storage pit (3) for each livestock operation (2), said pit being located in proximity to the respective facility.

The system further comprises transfer means for conveying the waste to a collection point, and an electromechanical monitoring device (5) for each livestock operation (2), wherein each monitoring device comprises an internal unit (5.1) positioned in a submerged arrangement within the pit (3) for recording and controlling parameters of the stored slurry (1), and an external unit (5.2) located outside the pit (3) for managing the monitoring processes.

In another aspect, the external unit (5.2) of the monitoring device (5) comprises a flow control module (6) configured to activate the circulation of waste from the pit (3) to the external unit (5.2) for sampling, as well as toward the transfer means for its delivery to the collection point.

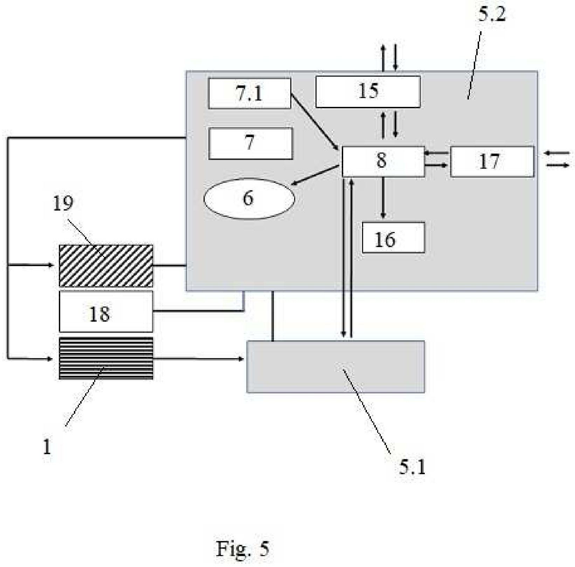

As illustrated in Figure 5, the external unit further comprises a sampling module (7) equipped with measurement sensors (7.1), and a process control module (8) that controls the internal unit (5.1) and the remaining modules of the external unit (5.2).

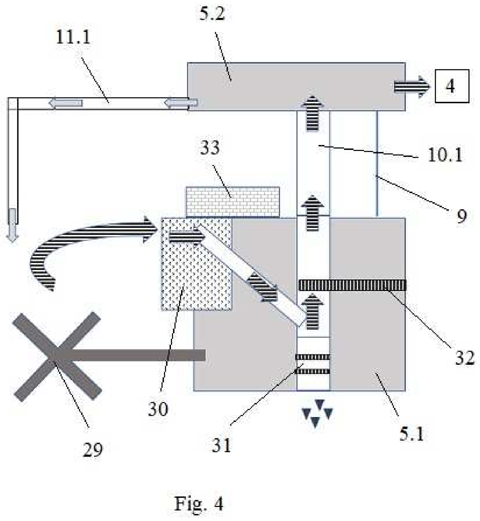

Said external unit (5.2) is connected to the internal unit (5.1) via power and data transfer cables (9), and via a first extraction conduit (10.1) for homogenized slurry (1) samples and a first return conduit (11.1) for said samples, as shown in Figure 4.

The system additionally comprises remote control means (12), consisting of a server and wireless communication components for interfacing with the process control module (8) of the external unit (5.2) of each monitoring device (5) in the system, and with at least one electronic device that incorporates a software application.

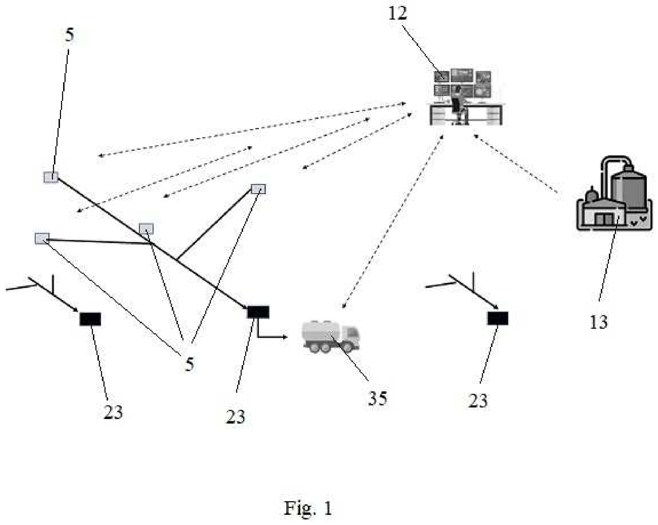

As illustrated in Figure 1, these control means (12) monitor the pits (3) of all livestock operations (2) included in the system through the installed monitoring devices (5), and synchronize the emptying of waste from said pits (3) via the monitoring devices (5), taking into account the availability of the collection fleet and the status of the biogas plant (13) receiving the waste.

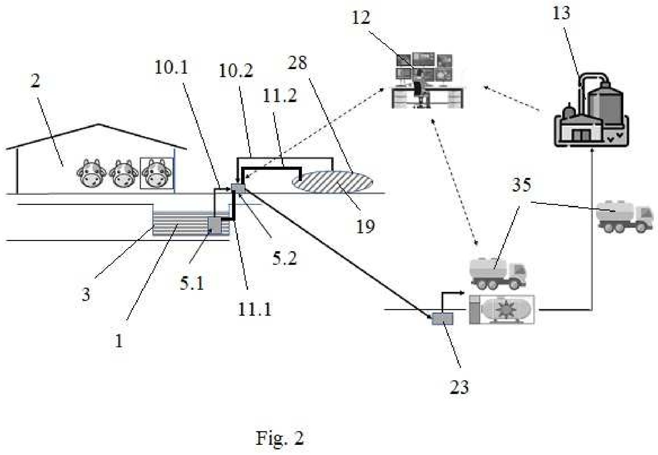

In this first preferred embodiment of the invention, the waste also comprises whey (19) originating from cheese factories, which is stored in a storage tank (28), as represented in Figure 2. In this case, the monitoring device (5) is connected to said storage tank (28) via a second extraction conduit (10.2) and a second return conduit (11.2) for collecting whey (19) samples.

Furthermore, as illustrated in Figure 4, in this preferred embodiment, the internal unit (5.1) of the monitoring device (5) comprises an agitator (29) for the waste, a grinder (30) for homogenizing the slurry (1), a sedimentation elbow (31) for solids, a cleaning screen (32) at the inlet of the first extraction conduit (10.1), and a level sensor (33).

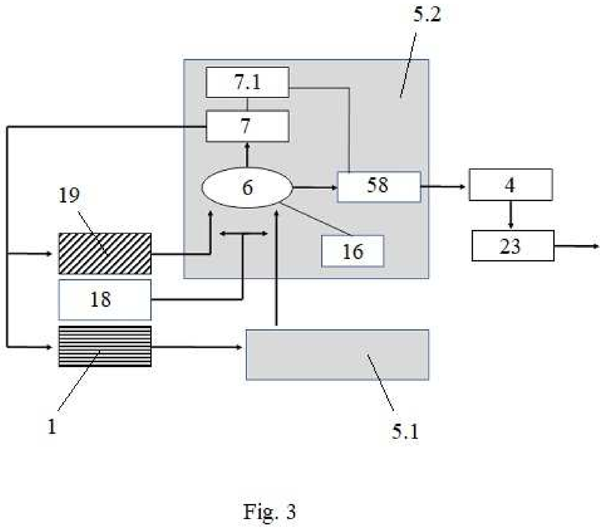

As shown in Figures 3 and 5, the external unit (5.2) in this embodiment comprises an electric transformer (14) to supply power to the monitoring device, a wireless communications module (15) for interfacing with the control means (12) of the system, a pumping mechanism (16) for transferring waste samples from the pit (3) or the storage tank (28) to the external unit (5.2) or to the transfer means, a vacuum pump protection mechanism, and a manual operation interface (17). The measurement sensors (7.1) of the sampling module (7) comprise a flowmeter, a pressure sensor, a density sensor, a pH sensor, a conductivity sensor, a BOD (Biological Oxygen Demand) sensor, or a COD (Chemical Oxygen Demand) sensor.

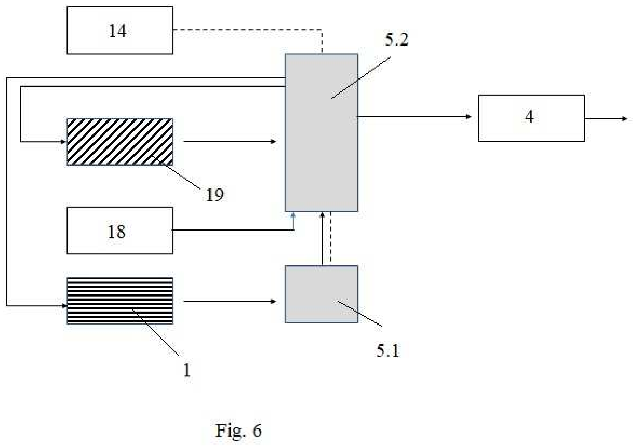

Additionally, the external unit (5.2) in this embodiment includes a connection to a water inlet or reservoir (18) to facilitate cleaning of the pumping mechanism (16) and the pipeline (4), as illustrated in Figures 3, 5, and 6.

As further depicted in Figure 5, the flow control module (6) of the external unit (5.2) is governed by the process control module (8), and activates the corresponding pumps and valves to direct the flow of either waste or water toward the appropriate conduit - either toward the sampling module (7), or, once discharge parameters (58) are validated and upon request by the system operator through the control means (12), toward the collection point.

The sampling module (7) automatically receives, at periodic intervals, slurry (1) samples from the pit (3) via the internal unit (5.1), and whey (19) samples through the input connections. These samples are analyzed by the sensors (7.1), then returned to the pit (3) or the storage tank (20) through the return conduits. The analysis results are transmitted to the communications module (15), which, together with measurements of the fill level of each pit (3), records the data in the cloud and relays it to the control means (12) of the system operator.

In this way, the operator has real-time access to quantitative and qualitative information regarding the slurry (1) stored in the pits (3) of the livestock operations (2) within their area, enabling optimized planning of collection activities to reduce cost and collection time.

Likewise, by knowing the "stock" of stored slurry (1) or whey (19) and its accumulation pattern at each operation (2), the operator can schedule collection to maintain high utilization of the processing capacity of the biogas plant (13).

The sampling module (7) is also manually accessible, allowing the user or operator to extract samples for further laboratory analysis of the contents of the pit (3).

The process control module (8) serves as the central processing unit of the monitoring device (5), managing not only all modules of the external unit (5.2), but also the internal unit (5.1). This module executes operation programs and is remotely controlled by the system operator via the control means (12). However, it is also equipped with an auxiliary operation interface (17) that allows in situ operation, which requires authorization or an activation code from the operator.

The communications module (15) of the external unit (5.2) transmits to the control means (12) - and therefore to the operator - information on the quantity and quality of the slurry (1) stored in the pit (3), as well as the condition of the pipelines, and it receives instructions to activate pumping operations toward the collection point.

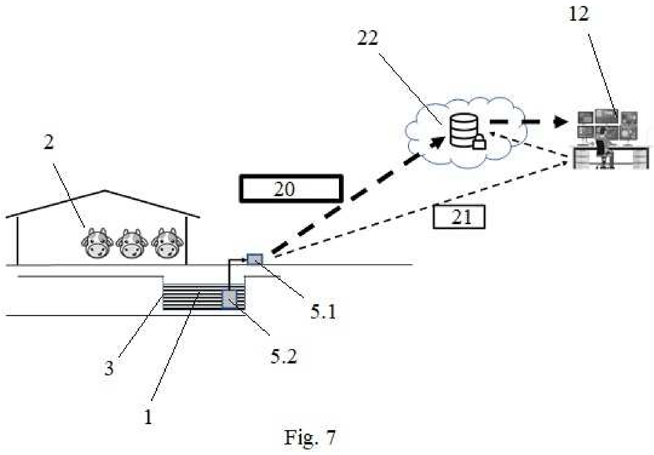

As illustrated in Figure 7, this module uses 4G connectivity (20). If 4G service is unavailable, interrupted, or unstable, it switches to a radio-based data communication protocol (21) in the UHF band (2.5-5.8 GHz), connecting to the data station of the collection operator or the plant to maintain communication.

Data exchange between the operator's control means (12) and the monitoring devices (5) is routed through a cloud-based database server (22), where all transaction parameters are logged. Specifically, the system records data in the following fields:
- Identifier of the monitoring devices (5) and the collection point
- Start time of the transaction
- Volume of waste discharged
- End time of the transaction
- Identification of the collection medium connected to the collection point
- Type of discharge (slurry / whey / cleaning)
- Relevant parameters measured during discharge (e.g., density, moisture, conductivity, pH, etc.)

When a stable internet network is unavailable and communication with the control means (12) is conducted via radio (21), the operator's reception center automatically transmits the received data for registration in the server (22).

This data logging occurs without human intervention, being triggered automatically by the discharge event, thereby constituting an application of the "Internet of Things" (IoT) to the livestock waste management industry.

This is made possible because the transmission and recording of data in the cloud database is pre-programmed and fully automated. The online database server (22) employs blockchain technology to generate a continuous, traceable, verifiable, and auditable transaction log. This allows the livestock operator to demonstrate, to regulatory bodies and third parties, that waste has been responsibly managed through the operator.

Furthermore, the system communicates with each livestock operator via a mobile application, a website, and/or by email or SMS, providing status updates and notifications (e.g., alerts, statistics, system status, transactions, etc.) relevant to their operations, so they may take any necessary preventive or corrective action.

In this first preferred embodiment of the invention, as illustrated in Figures 1 and 2, the collection point consists of a manhole structure (23), and the transfer means include a pipeline (4) that connects said manhole (23) with one or more pits (3) from various livestock operations integrated into the system.

Specifically, in this embodiment, the manhole (23) includes a safety reservoir for temporarily storing waste volumes that have been rejected for transfer to the plant (13).

The pipeline (4) is preferably installed underground to reduce the risk of damage or freezing. The manhole (23), in turn, is sized variably to maximize the loading capacity of the collection tanker and speed up the loading operation.

Thus, in this first preferred embodiment of the invention, as shown in Figure 2, the monitoring device (5) is connected via the buried pipeline (4) from the livestock facility (2) to a collection point located at the parking site of the collection medium, which may be a container, tank, or tanker truck. The purpose of the collection point - in this case, the manhole (23) - is to enable rapid loading of the tanker when no stationary container is available at the parking location. The operator connects the manhole (23) to the collection medium upon positioning the vehicle at the designated site.

The flow control module (6) of the external unit (5.2) regulates the pumped flow rate of each fluid and transmits the flowmeter readings to the wireless communications module (15), for delivery to the control means (12) and logging in the system. It also performs pressure tests to verify that there are no leaks or ruptures in the discharge pipeline leading to the collection point, activating the operator's alarm in the event of detection.

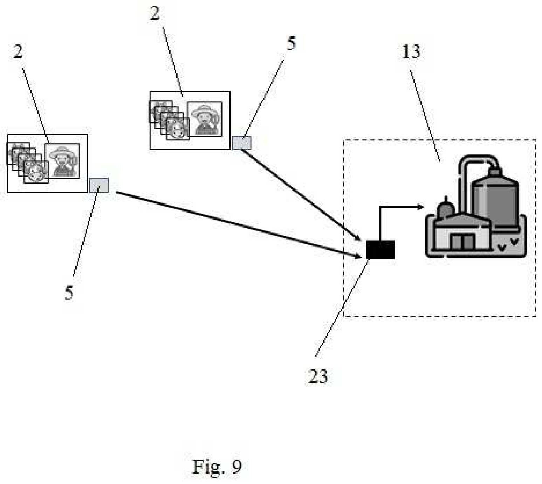

In this first preferred embodiment, the manhole (23) is located outside the anaerobic digestion plant (13). However, in alternative embodiments, it may be located within the plant (13) itself, as in a second preferred embodiment shown in Figure 9.

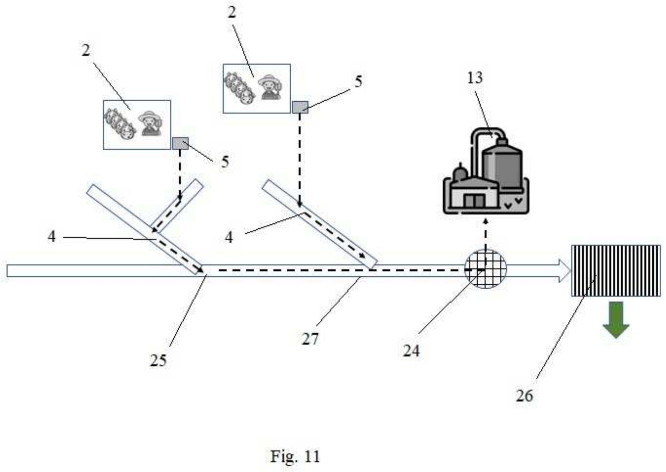

Another configuration allows the collection point to be formed by a connection (27) from the plant (13) to a sanitation network (25), specifically at a segment (27) upstream of the inlet to a wastewater treatment plant (WWTP) (26) located near the anaerobic digestion plant (13), as occurs in a third preferred embodiment represented in Figure 11. In this case, the connection includes a unit for separating solids and impurities from the waste.

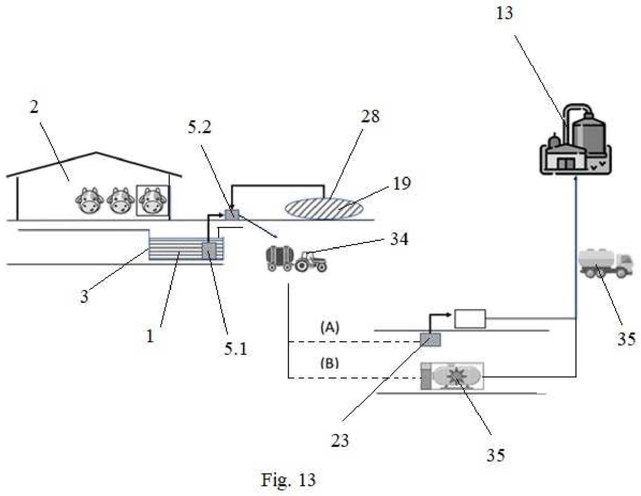

Additionally, in this third preferred embodiment, as shown in Figure 13, the collection point may consist of collection means (35) for transport to the plant (13), or a manhole (23), while the transfer means from at least one livestock operation (2) consist of a tank (34) used by the livestock operator for transport.

This specification further discloses a process for monitoring, treatment, and synchronized transfer of liquid waste to anaerobic digestion plants using a system as previously defined.

This process includes a first phase of automated monitoring (36), for periodic sampling, at regular time intervals, of at least the slurry (1) stored in a pit (3) at one or more livestock operations (2), via the external unit (5.2) of the monitoring device (5) corresponding to each operation (2), activated remotely through the control means (12).

This allows the operator to obtain real-time information on the quantity and quality of the slurry in the pit (3), without requiring any intervention from the livestock operator and without generating any discharge.

The service operator simultaneously receives this information from all pits (3) in their area that are equipped with monitoring devices (5), and uses it to plan and coordinate logistics for the collection fleet, ensuring efficient collection of slurry (1) that is non-degraded and optimal for processing at the plant (13).

Next is the second phase of remote activation (37) of the monitoring device (5) via the control means (12), to send the stored waste to the collection point through the transfer means, after analysis of the waste to be transferred and provided that the measured values are within acceptable thresholds.

The operator schedules and synchronizes the activation (37) of the monitoring device (5) with the arrival of the collection vehicle at the parking location of the collection point, thereby minimizing collection time. This is achieved using predictive analysis based on aggregated data from the monitoring devices (5) linked to each collection point and the geolocation of the collection fleet.

The process concludes with a final reception phase (38) at the collection point, where waste is received from at least one livestock operation (2).

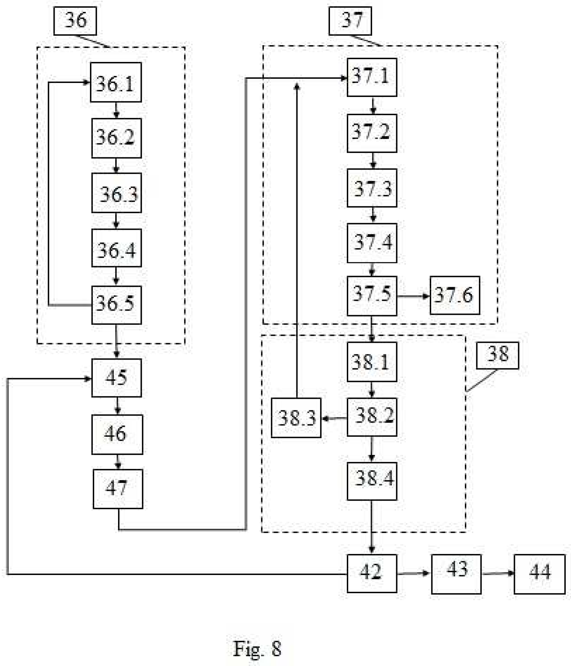

In a first preferred embodiment of the invention, as shown in Figure 8, the first automatic monitoring phase (36) comprises a first stage of extraction (36.1) of a sample from the storage point (3) to the external unit (5.2) of the monitoring device (5).

Next, a second stage of sampling (36.2) and analysis (36.3) of the sample data is carried out, followed by a third stage consisting of the transmission (36.4) of the obtained data to the control means (12), and a final stage of returning (36.5) the sample volume to the storage point (3).

In turn, the second phase of remote activation (37) of the monitoring device (5) comprises a first stage of extraction and pumping (37.1) of the liquid waste towards the transfer means.

Subsequently, a second stage of grinding (37.2) of the waste simultaneous with pumping is carried out, together with the separation of foreign bodies by means of the sedimentation elbow (31).

This grinding operation homogenizes the waste, preventing its sedimentation in the storage point (3) by means of agitation.

As shown in Figure 8, a third stage consists of measuring (37.3) the transferred flow, a fourth stage consists of sampling and analysis (37.4) of the transferred waste, followed by a fifth stage of data transmission (37.5) of the discharge, and a sixth stage of registration (37.6) in a verifiable database.

If the measured parameters are not suitable for collection, the transfer is canceled or interrupted, and a signal is sent to the operator to assess and resolve the issue with the livestock operator.

The monitoring device (5) logs and transmits to the cloud server all discharge data, including the identification of the pit (3), volume transferred, operation timestamps, and key quality parameters measured during the transfer. This information is stored in a blockchain-enabled, auditable, and traceable database. It may later be used by the operator for billing or to support certificates of responsible waste management provided to the livestock operator.

In this first preferred embodiment, as illustrated in Figure 2, the waste further includes whey (19). In this case, the remote activation (37) of the monitoring device (5) via the control means (12) for transferring the stored whey (19) to the collection point is carried out separately from the transfer of slurry (1).

As shown in Figures 1 to 3, in this embodiment the collection point consists of a manhole (23) located externally to the plant (13).

Thus, in this case, the third reception phase (38) in the inspection chamber (23) comprises a verification (38.1) of the delivered flow rates, a connection (38.2) to said inspection chamber (23) of collection means (35), for the transfer of the waste to the same under anaerobic conditions, an activation (38.3) of the next monitoring device (5) corresponding to another exploitation of the system, and a final disconnection (38.3) of the collection means (35) from the inspection chamber (23) for their displacement to the treatment point (13), as shown in Figure 8.

Finally, the collection means depart (42) from the parking point, perform transport (43) to the biogas plant (13), and there the anaerobic digestion (44) of the waste is carried out.

Additionally, in this first preferred embodiment - where the process involves relocation of the collection means (35) to the manhole (23) - the deployment of the collection means (35) to the collection point includes a synchronization (45) by the control means (12), such that remote activation of the monitoring device (5) is initiated only when the collection means (35) are positioned and connected to the manhole (23). This phase also includes movement (46) to the parking location near the collection point and connection (47) to the manhole.

The collection means may be a static or mobile container, a permanent or temporary cage tank, or a stationary collection tanker truck.

Thus, the collection means may be static (permanently connected), or temporary, with the waste operator responsible for positioning, connecting, emptying via tanker truck, and subsequent disconnection and removal.

The collection means may also consist of the tanker truck itself, connected directly to the manhole (23).

The collection operator, using geolocation, tracks both the position of the collection tankers and the status and activation of the monitoring devices (5) connected to the manholes (23). This enables coordinated scheduling of device activations alongside management of the collection means.

Reception may also be carried out by collection containers that may be permanently stationed at the parking point or be mobile. That is, the operator may choose to position the container at the collection point only on certain days of the week, which is when pumping from the livestock farms to the positioned container via the manhole takes place.

When the collection means (35) are positioned at the collection point, they are connected (47) to the manhole (23), from which slurry (1) is transferred under anaerobic conditions into the storage or transport tank. This enables maximum reduction of discharge time by synchronizing the reception of waste volumes into the manhole (23) with the arrival of the collection means.

In low-density areas with smaller livestock farms, the operator may choose to deploy temporary small-capacity cage tanks just before collection. These are distributed at the collection points and connected to the manhole. The tanker truck then empties these cage tanks once full (like the collection of municipal solid waste bins) and subsequently removes them after emptying.

In all cases, the monitoring devices (5) are only operational when the manhole (23) confirms, via data transmission, that a collection means is positioned at the collection point. An alarm is triggered on the operator's panel if this condition is not met.

This flexibility in collection means allows the system to adapt to the diversity in the size and geographic distribution of livestock operations within the collection area.

In a second preferred embodiment of the invention, as shown in Figure 9, the collection point consists of a manhole (23) located inside the anaerobic digestion plant (13), and the reception phase (38) in the manhole (23) includes verification (38.1) of delivered flow rates and transfer of the waste to the digester or mixing unit.

This configuration is suitable when livestock operations are located at higher elevations and near the biogas plant. In such cases, direct pumping to a manhole (23) located within the plant (13) and directly connected to the mixing module is possible. This manhole (23) must also incorporate the measuring and control functions typically implemented in the container or collection tanker, as it is connected directly to the mixing module of the plant (13).

For farms where this embodiment is feasible, collection operating costs are reduced, although it requires investment in pipeline infrastructure.

In this configuration, the operator's synchronization considers only the fill level of the pit (3) and the load status of the digester, activating the pit (3) emptying process based on both the slurry (1)'s level and maturation state in the pit (3) and the load and fermentation state of the plant (13).

By accessing all this data in real time through the sensors, and being able to monitor the results of anaerobic digestion, the operator can apply machine learning technologies to optimize plant performance by adjusting feeding patterns through the monitoring device.

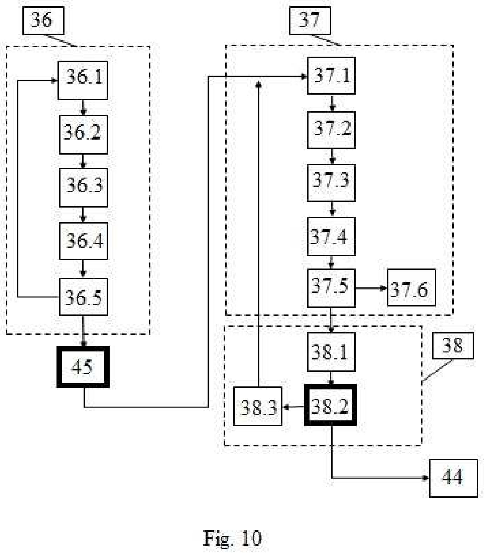

As shown in Figure 10, in this second preferred embodiment, no collection means are deployed to transport the waste to the biogas plant (13). Instead, the operator uses the monitoring device (5) to monitor and synchronize the status of the pit (3) with the biogas plant (13) and its forecasted waste intake, transferring the waste directly by pumping to the mixing unit or digester.

This results in even lower operational costs, making this embodiment preferred in operations where such implementation is viable.

In a third preferred embodiment, shown in Figure 11, the collection point is formed by a connection (24) between the plant (13) and a segment (27) of a sanitation network located upstream of the inlet to a wastewater treatment plant (WWTP) (26). The transfer means from the pit (3) or storage tank (28) to the collection point consist of a pipeline (4) connecting the pit (3) to said sewer segment (25).

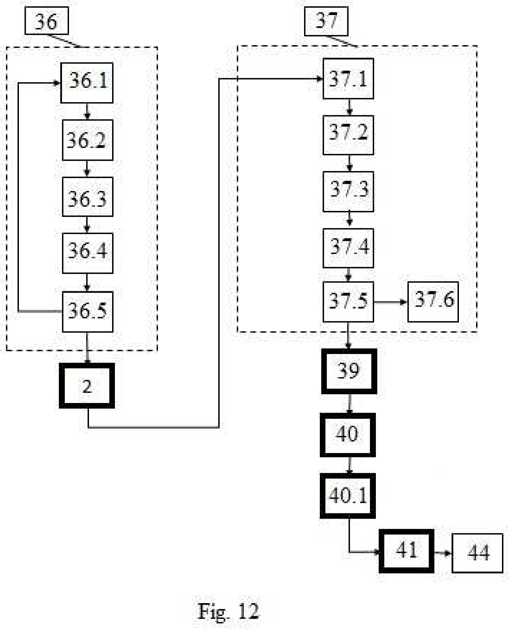

In this case, as can be observed in Figure 12, the process comprises a discharge phase (39) of the waste into the sanitation network (25), an interception and entry (40) of the waste flow through the connection (24) of the plant (13) to the section (27) of the sanitation network (25) upstream of the WWTP (26), a filtration and separation of solids (40.1) by means of a solid separation unit, and an entry (41) of the filtered waste into a mixer to feed the process of the treatment point (13) and the valorization (44) of the same in the plant (13).

In this case, there is no reception phase in a chamber (23) because the discharge conduit flows directly into the sewage network (25), and the monitoring device (5) transfers the waste to it according to the programming and when the waste meets the conditions for transfer.

In this case, the synchronization of the monitoring device (5) is carried out with the biogas plant or treatment point (13) and with the other monitoring devices (5) connected to the sewage network (25), which are activated between 4 and 5 a.m. depending on their location, in order to create a flow in the pipeline that is optimal for transfer and recovery at the connection (24) of the treatment point (13). This connection (24) of the treatment point (13) to the section (27) of the sewage network (25) is only active during this time interval, when the ordinary (domestic) discharge flow is minimal.

When the connection (24) of the treatment point (13) to said section (27) is activated, it transfers the flow passing through it to a solid separation unit to remove solid impurities that may come from domestic discharges, returning them to the wastewater treatment plant (EDAR) (26) through the collector. Subsequently, the treatment point (13) transfers the intercepted and cleaned flow to the valorization process (44).

In this third embodiment, the monitoring device (5) takes advantage of existing sewer infrastructure during unused hours, eliminating the need for waste collection from farms with nearby access to the sanitation network.

This drastically reduces collection costs, though it requires additional infrastructure at the biogas plant (interceptor and separator) and prior authorization from the sewer and WWTP operator.

A fourth preferred embodiment of the invention is also proposed, in which the transfer means from the storage point (3) or the whey storage tank (28) to the collection point are formed by a tank (34) for transport or directly by the collection means (35) that transport them to the treatment point (13) either directly or through a collection route.

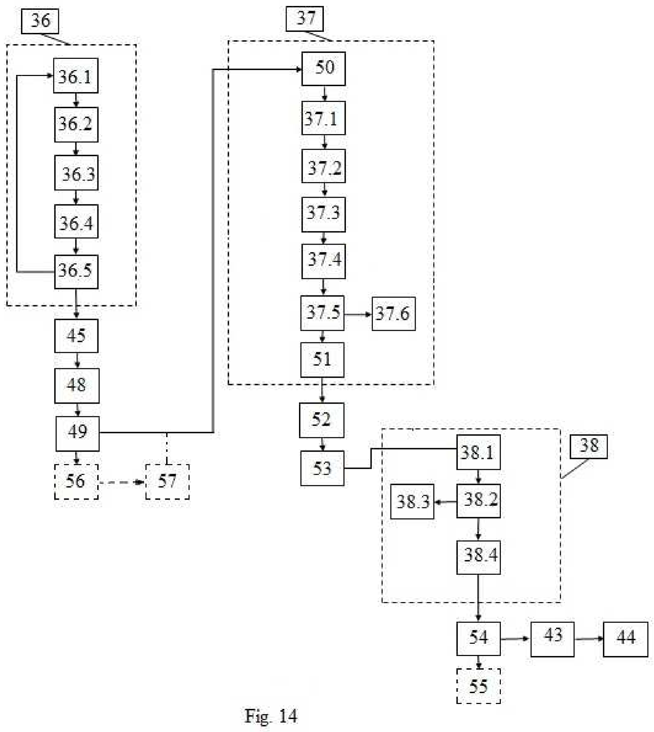

As shown in Figure 14, this process includes, prior to remote activation (37) of the monitoring device (5), a first notification stage (48) in which the operator alerts the livestock farmer via an electronic device, specifying the approximate time the tank (34) should be connected to the monitoring device (5) to transfer a defined volume of slurry (1).

The second stage consists of confirmation (49) by the farmer via electronic device, approving the notification. Upon confirmation, the operator positions a collection means at the collection point. If the point lacks a manhole, the collection means includes one.

A third stage consists of a verification (50) of the connection of the monitoring device (5) to the transport tank (34) or to the collection means of the waste manager (35).

Next, a fourth stage is carried out consisting of the discharge and generation (51) of a QR code for identification of the discharge, and a fifth stage of transport (52) of the transport tank (34) to the collection point, or of the collection means of the waste manager (35) to the treatment point (13) or to the next facility (2).

If the previous stage is carried out up to the collection point, then a sixth stage is carried out consisting of the connection (53) of the transport tank (34) to the collection point and the authorization of the discharge by means of the QR code, a seventh stage of discharge (54) of the transport tank (34) at the collection point, and an eighth stage of removal (55) of the transport tank (34).

In this fourth embodiment, as shown in Figure 13, the collection point may consist of a manhole (23) discharging into collection means (35), or the collection means (35) directly. In both cases, after the tank (34) is emptied, the process includes departure (42) of the collection means (35) from the parking point, transport (43) to the plant (13), and anaerobic digestion (44) of the waste.

If no permanent collection means (35) are present at the collection point, a positioning stage (56) is required after farmer confirmation (49). If a manhole (23) is present at the parking point for flow regulation, a connection stage (57) between the collection means and the manhole (23) is also required.

After discharge, a removal stage (55) of the collection means may take place.

In an additional aspect of the first preferred embodiment, automatic monitoring (36) for sampling via the control means (12) includes monitoring of the fill level of the pit using an internet-connected electromechanical device.

Likewise, in this case, the automatic monitoring (36) for sampling through the control means (12) further comprises a sampling and monitoring of the physicochemical parameters of the liquid waste by means of an electromechanical device connected to the internet.

Similarly, in this case, the automatic monitoring (36) for sampling through the control means also comprises an extraction of the waste sample for sending to an external laboratory and a return of the sample to the storage point (3) once the analysis has been completed.

In this embodiment, the remote activation (37) of each monitoring device (5) occurs sequentially, once reception of waste from the previously activated monitoring device (5) is completed. In other embodiments, the remote activation of two or more monitoring devices (5) may occur simultaneously.

## Claims

1. A system for the monitoring, treatment, and synchronized transfer of liquid waste to treatment plants (13), wherein said waste comprises slurry (1) or whey (19) originating from one or more livestock operations (2), **characterized in that** it comprises:
• a slurry storage pit (3) for each livestock operation (2);
• transfer means for conveying the waste to a collection point;
• an electromechanical monitoring device (5) for each livestock operation (2), comprising an internal unit (5.1) positioned in a submerged manner within the pit (3), for recording and controlling parameters of the stored slurry (1), and an external unit (5.2) outside the pit (3) for controlling the monitoring processes, wherein the external unit (5.2) comprises a flow control module (6) configured to activate the circulation of waste from the pit (3) to the external unit (5.2) for sampling, and to the transfer means, a sampling module (7) with measurement sensors (7.1), and a process control module (8) configured to control the internal unit (5.1) and the other modules of the external unit (5.2), wherein said external unit (5.2) is connected to the internal unit (5.1) via power and data cables (9), and via a first extraction conduit (10.1) for homogenized slurry (1) samples and a first return conduit (11.1) for said samples; and
• remote control means (12) comprising a server (22) and wireless communication means (15) with the process control module (8) of each monitoring device (5) and with at least one electronic device comprising an integrated software application.

2. The system according to claim 1, wherein the waste further comprises whey (19) from cheese factories stored in a storage tank (28), and wherein the monitoring device (5) is connected to said storage tank (28) via a second extraction conduit (10.2) and a second return conduit (11.2) for collecting whey (19) samples.

3. The system according to claim 1 or 2, wherein the internal unit (5.1) of the monitoring device (5) comprises an agitator (29) for the waste, a grinder (30) for homogenizing the slurry (1), a sedimentation elbow (31) for solids, a cleaning screen (32) at the inlet to the first extraction conduit (10.1), and a level sensor (33).

4. The system according to any of the preceding claims, wherein the external unit (5.2) comprises an electrical transformer (14) for powering the monitoring device (5), a wireless communications module (15) with the control means (12), a pumping mechanism (16) for conveying waste samples from the pit (3) or storage tank (28) to the external unit (5.2) or to the transfer means, a vacuum pump protection mechanism, and a manual operation interface (17).

5. The system according to any of claims 1 to 4, wherein the measurement sensors (7.1) of the sampling module (7) comprise one or more of the following: a flowmeter, a pressure sensor, a density sensor, a pH sensor, a conductivity sensor, a BOD (Biological Oxygen Demand) sensor, and a COD (Chemical Oxygen Demand) sensor.

6. The system according to any of the preceding claims, wherein the collection point comprises a manhole (23).

7. The system according to claim 6, wherein the manhole (23) comprises a safety tank for storing a volume of waste discarded from being sent to the treatment plant (13).

8. The system according to any of claims 1 to 5, wherein the collection point comprises a connection from the plant (13) to a sanitation network, in a segment (27) located upstream of the inlet to a wastewater treatment plant (WWTP) (26).

9. The system according to any of claims 6 to 8, wherein the transfer means comprise a pipeline (4) connecting one or more storage points (3) to the manhole (23) and the collection point.

10. The system according to claim 9, wherein the external unit (5.2) comprises a connection to a water supply or reservoir (18) for cleaning the pumping mechanism (16) and pipeline (4).

11. The system according to any of claims 1 to 5, wherein the collection point comprises collection means (35) for transport to the plant (13), or a manhole (23), and wherein the transfer means from at least one livestock operation (2) comprise a tanker truck (34) for transport to the collection point by the servicer of the farm (2).

12. A process for the monitoring, treatment, and synchronized transfer of liquid waste to anaerobic digestion plants using a system as defined in claims 1 to 11, **characterized in that** it comprises:
• automated monitoring (36) for sampling, at regular time intervals, of at least the slurry (1) stored in a pit (3) of one or more livestock operations (2), via the external unit (5.2) of the monitoring device (5) corresponding to each operation (2), remotely activated via the control means (12);
• remote activation (37) of the monitoring device (5) via the control means (12), to transfer the stored waste to the collection point via the transfer means, after analysis of the waste and if the measured values are within acceptable thresholds; and
• reception (38) at the collection point of the waste transferred from at least one livestock operation (2).

13. The process according to claim 12, wherein the automated monitoring (36) comprises:
• extraction (36.1) of a sample from the pit (3) to the external unit (5.2);
• sampling (36.2) and analysis (36.3) of the sample data;
• transmission (36.4) of the data to the control means (12); and
• return (36.5) of the sample volume to the pit (3).

14. The process according to any of claims 12 or 13, wherein the remote activation (37) of the monitoring device (5) comprises:
• extraction and pumping (37.1) of liquid waste to the transfer means;
• grinding (37.2) of the waste simultaneous with pumping and separation of foreign bodies via the sedimentation elbow (31);
• flow rate measurement (37.3);
• sampling and analysis (37.4) of the transferred waste;
• data transmission (37.5) of the discharge; and
• logging (37.6) in a verifiable database.

15. The process according to any of claims 12 to 14, wherein the waste also comprises whey (19), and the remote activation (37) of the monitoring device (5) via the control means (12) for transferring the whey (19) is performed separately from the slurry (1).

16. The process according to any of claims 12 to 15, wherein the transfer means from the pit (3) or storage tank (28) to the collection point comprise a tank (34) for transport, and wherein, prior to remote activation (37), the following steps are carried out:
• notification (48) by the operator to the farmer via an electronic device;
• confirmation (49) by the farmer using said electronic device;
• connection check (50) between the monitoring device (5) and the transport tank (34);
• discharge and QR code generation (51) for identifying the discharge;
• transport (52) of the tank (34) to the collection point;
• connection (53) of the tank (34) to the collection point and discharge authorization via QR code;
• discharge (54) of the tank (34) at the collection point; and
• removal (55) of the tank (34).

17. The process according to claim 16, wherein the collection point comprises collection means (35), and after discharge (54) of the tank (34), the process comprises removal (55) of said collection means (35) for transport to the plant (13).

18. The process according to any of claims 12 to 16, wherein the collection point is formed by a chamber (23) located externally to the treatment point (13), and the reception (38) in the chamber (23) comprises a verification (38.1) of the delivered flow rates, a connection (38.2) to said chamber (23) of collection means (35) for transfer of the waste thereto under optimal conditions, and a final disconnection (38.4) of the collection means (35) from the chamber (23) for their displacement to the treatment point (13).

19. The process according to claim 18, further comprising movement (46) of the collection means (35) to the manhole (23), wherein said movement (46) is synchronized by the control means (12) such that the remote activation of the monitoring device (5) is initiated only once the collection means (35) are positioned and connected to said manhole (23).

20. The process according to any of claims 12 to 16, wherein the collection point is formed by a manhole (23) located within the anaerobic digestion plant (13), and the reception (38) in the manhole (23) comprises a verification (38.1) of delivered flow rates and a transfer of the waste to the digester or mixing unit.

21. Process according to any of claims 12 to 15, wherein the transfer means from the storage point (3) or the whey storage tank (28) to the collection point are formed by a pipeline (4) connecting the storage point (3) to a collector of a sanitation network (25), and wherein the collection point is formed by a connection of the treatment point (13) to a section (27) of said sanitation network (25) located upstream of the inlet to a wastewater treatment plant (EDAR) (26), and comprises a discharge phase (39) of the waste into the sanitation network (25), an interception and entry (40) of the waste flow through the connection (24) of the treatment point (13) to the section (27) of the sanitation network (25) upstream of the EDAR (26), a filtering and solid separation (40.1) by means of a solid separation unit, and an entry (41) of the waste into the treatment process of the treatment point (13).

22. The process according to any of claims 12 to 21, wherein the automated monitoring (36) for sampling via the control means (12) comprises monitoring of the fill level of the pit using an internet-connected electromechanical device.

23. The process according to any of claims 12 to 22, wherein the automated monitoring (36) for sampling via the control means (12) comprises sampling and monitoring of the physicochemical parameters of the liquid waste using an internet-connected electromechanical device.

24. The process according to any of claims 12 to 23, wherein the automated monitoring (36) for sampling via the control means comprises extraction of a waste sample for submission to an external laboratory; and return of the sample to the pit or tank after completion of the analysis.

25. The process according to any of claims 12 to 24, wherein the remote activation (37) of each monitoring device (5) occurs sequentially, once the reception of waste from a previously activated monitoring device (5) in the system is completed.

26. The process according to any of claims 12 to 25, wherein the remote activation of two or more monitoring devices (5) is performed simultaneously.
